# FASCICULE DE BREVET EUROPEEN

(11) **EP 2 727 403 B1**
(45) Date de publication et mention de la délivrance du brevet: **13.05.2020**
(21) Numéro de dépôt: 12733638.6
(22) Date de dépôt: 28.06.2012
(51) Int. Cl.: H04W 40/00, H04L 12/10

(54) **PROCÉDÉ POUR L'EXTINCTION DE ROUTEURS DANS UN RÉSEAU DE COMMUNICATIONS ET ROUTEUR METTANT EN OEUVRE CE PROCÉDÉ**
VERFAHREN ZUM LÖSCHEN VON ROUTERN IN EINEM KOMMUNIKATIONSNETZ UND ROUTER ZUR UMSETZUNG DIESES VERFAHRENS
METHOD FOR EXTINGUISHING ROUTERS IN A COMMUNICATIONS NETWORK AND ROUTER IMPLEMENTING THIS METHOD

(30) Priorité: 28.06.2011 FR 1155729
(43) Date de publication de la demande: 07.05.2014
(73) Titulaire: Université Paris Sud XI, 91405 Orsay Cedex (FR); Centre National de la Recherche Scientifique (C.N.R.S.), 75794 Paris Cedex 16 (FR)
(72) Inventeur: KHALDOUN, Al Agha, F-75014 Paris (FR)
(74) Mandataire: Priori, Enrico
(86) Numéro de dépôt international: PCT/EP2012/062550
(87) Numéro de publication internationale: WO 2013/000996

(56) Documents cités:
- JP-A- 2011 087 043
- US-A1- 2011 002 338

## Description

L'invention se situe dans le domaine des réseaux de télécommunications de l'Internet et, en particulier, de la réduction la consommation d'énergie dans ces réseaux.

Dans les réseaux de télécommunications tels que l'Internet, les données entre deux équipements du réseau sont transmises sous forme de messages découpés en paquets transmis séparément. Chaque paquet inclut un en-tête, comprenant des informations utiles pour l'acheminer et reconstituer le message, et encapsule une partie des données.

Un routeur est un élément du réseau assurant le routage des paquets. Généralement, ces appareils maintiennent une table, appelée table de routage, dans laquelle sont mémorisées les meilleures routes vers les différents nœuds du réseau, via des métriques associées à ces routes.

Le routage est le procédé permettant de sélectionner des chemins dans le réseau pour acheminer les paquets depuis un expéditeur jusqu'à un ou plusieurs destinataires.

Une façon de limiter les pertes énergétiques dans ces réseaux est d'éteindre les équipements peu ou pas utiles au fonctionnement du réseau.

On connaît déjà des algorithmes permettant d'éteindre des équipements du réseau. Cependant, ces algorithmes sont basés sur une élection d'un super nœud (aussi appelé master) qui ordonne une synchronisation et envoie des ordres aux équipements avoisinants. Ces algorithmes présentent donc l'inconvénient de ne fonctionner que de façon synchronisé et nécessitent que les équipements aient un lien physique direct avec le master. De plus, ils ne peuvent fonctionner qu'avec un nombre limité d'équipements et ne sont pas adaptés à une augmentation du nombre de d'équipements dans le réseau. On peut citer à titre d'exemple la demande de brevet US20080307075 divulguant une méthode pour désactiver des nœuds d'un réseau et nécessitant une synchronisation entre ces nœuds.

Le document US 2011/0002338 A1 porte sur un dispositif destiné à mettre en veille les routeurs d'un réseau lorsque ceux-ci ne sont pas utilisés pour une transmission de paquets.

L'invention vise à pallier les problèmes cités précédemment en proposant un procédé pour l'extinction de routeurs dans un réseau de communications permettant de réduire la consommation d'énergie d'un réseau en éteignant les routeurs non utiles pour le réseau tout en s'affranchissant de contraintes de synchronisation entre ces routeurs.

A cet effet, l'invention a pour objet un procédé pour l'extinction de routeurs, fonctionnant selon un protocole à état de liens, dans un réseau de communications, ledit réseau reliant une pluralité d'équipements, ledit procédé étant exécuté simultanément sur une pluralité de routeurs du réseau et comportant :
- une étape d'initialisation du routeur,
- une étape de surveillance vérifiant une liste de conditions prédéfinies à remplir pour permettre l'extinction du routeur,
- une étape d'attente,
- une étape d'extinction comportant l'émission d'un message à destination des autres routeurs exécutant ledit procédé pour leur signaler l'extinction dudit routeur.
L'étape d'attente étant effectuée avant l'étape d'extinction, l'étape d'extinction étant effectuée seulement si aucun message d'extinction provenant d'autres routeurs, n'est reçu au cours de l'étape d'attente, et si l'une au moins des conditions suivantes est vérifiée. Ces conditions sont que le routeur n'est pas en cours de transfert de trafic et/ou que le routeur n'exécute pas d'autres applications et/ou que l'extinction du routeur n'entraîne pas la déconnexion d'au moins un des équipements. Afin de vérifier cette dernière condition, (l'extinction du routeur n'entraîne pas la déconnexion d'au moins un des équipements du réseau) les étapes suivantes sont utilisées :
- une étape de détermination d'un graphe représentant la topologie du réseau à l'aide d'information issue du protocole à état de liens, le graphe comportant des nœuds représentant les équipements et des liens représentant les connections entre les équipements,
- une étape de sélection d'un nœud voisin au nœud représentant le routeur,
- une étape de parcours en profondeur, à partir du nœud voisin sélectionné, du graphe du réseau auquel a été préalablement retiré le nœud représentant le routeur,
- une étape de vérification que tous les nœuds sont accessibles depuis le nœud voisin.

Si l'étape de vérification est valide alors ladite condition selon laquelle l'extinction du routeur n'entraîne pas la déconnexion d'au moins un des équipements est vérifiée sinon la condition selon laquelle l'extinction du routeur n'entraîne pas la déconnexion d'au moins un des équipements n'est pas vérifiée.
Si un message d'extinction provenant d'autres routeurs est reçu au cours de l'étape d'attente alors un retour à l'étape de surveillance est effectué.

Avantageusement le procédé comprend, en outre, une étape d'attente complémentaire dont la durée est paramétrable, destinée à prendre en compte le temps de propagation des messages dans le réseau.

Avantageusement, la durée de l'étape d'attente est déterminée selon une méthode pseudo-aléatoire, de façon à éviter l'extinction simultanée de plusieurs routeurs.

Avantageusement, la durée de l'étape d'attente est paramétrable en fonction de la qualité de service du routeur sur lequel le procédé est exécuté, plus la qualité de service du routeur étant élevée plus la durée de l'étape d'attente étant élevée.

Avantageusement, la qualité de service du routeur est évaluée à partir d'au moins une caractéristique choisie parmi : le débit, le délai, le niveau de sécurité du routeur.

L'invention concerne aussi un routeur caractérisé en ce qu'il comprend des moyens de mise en œuvre du procédé selon l'invention.

L'invention concerne aussi un réseau de télécommunication caractérisé en ce qu'il comporte au moins un routeur selon l'invention.

L'invention a pour avantage de permettre une économie d'énergie assez importante qui peut faire gagner plusieurs degrés de magnitude en fonction de l'activité du réseau. Un routeur en marche consomme entre 5 et 200 watts. Un routeur en veille en mémoire vive consomme quelques milliwatts. Un routeur en veille sur disque consomme 0 watts.

Un routeur en marche même s'il n'a pas de trafic à envoyer, consomme de l'énergie et envoie des informations de signalisation assez importantes. L'éteindre, s'il n'est pas utile, peut réduire une consommation importante du réseau.

De plus, un routeur en marche, partage sa bande passante avec d'autres routeurs réduisant ainsi leurs débits. En l'éteignant, leurs débits augmentent et par conséquent, ils vont consommer moins d'énergie pour envoyer la même information.

En heure de faible de travail (la nuit par exemple), l'invention peut baisser la consommation d'énergie allant jusqu'à 99% de gain.

De plus, l'utilisation d'un procédé distribué sur les routeurs permet d'augmenter facilement le nombre de routeurs dans le réseau sans réduire les performances du procédé.

Dans un mode de réalisation préféré, chaque routeur peut acquérir par un protocole de routage l'état des liens des nœuds du réseau. Cet état lui donne la possibilité de construire une cartographie de son réseau avec les connexions entre les nœuds et leur qualité. Ce procédé permet alors au routeur de décider seul et sans consulter aucun élément central de s'éteindre pour économiser son énergie. Cette décision est prise selon l'état du trafic et le rôle du nœud dans la connectivité du réseau. Le routeur se rallume selon différents mécanismes afin de tester de nouveau son utilité dans le réseau.

L'invention sera mieux comprise et d'autres avantages apparaîtront à la lecture de la description détaillée faite à titre d'exemple non limitatif et à l'aide des figures parmi lesquelles :
Les figures 1a et 1b représentent chacune un diagramme d'un mode de réalisation du procédé selon l'invention.
Les figures 2 et 3 montrent un exemple de réseau comportant une pluralité d'équipements.
La figure 4 montre un autre exemple de réseau comportant une pluralité d'équipements.
La figure 5 montre un exemple de routeur selon l'invention.

On considère un réseau de télécommunication qui utilise une pile de protocoles TCP/IP. Il s'agit d'un ensemble de protocoles offrant un certain nombre de fonctionnalités dont le routage. Le routage est la fonction qui permet à un paquet de partir d'un point source vers un point destination en empruntant des points intermédiaires. La route est une concaténation de liens physiques connectant les différents nœuds du réseau. Le routage consiste à faire une association de liens physiques pour former la route.

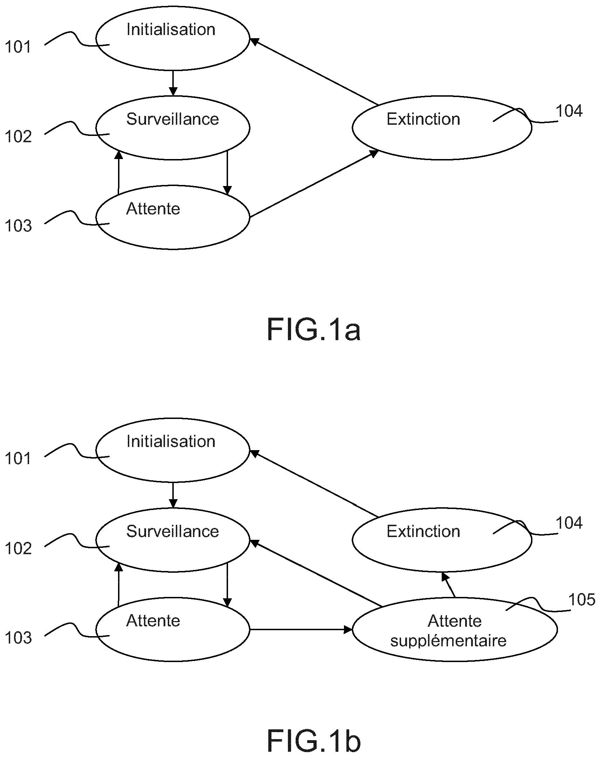

La figure 1a montre un diagramme du procédé selon l'invention. Le procédé comporte une étape d'initialisation 101 au cours de laquelle le routeur ne fait rien pendant une première durée D1, puis l'activité du routeur (démon) est démarrée. Une fois que le démon est lancé, le procédé passe à une étape de surveillance 102.

L'étape de surveillance 102 comprend la vérification de l'état du routeur sur lequel le procédé est exécuté, du réseau et du trafic. La vérification est effectuée à intervalles réguliers selon une deuxième durée D2 (par exemple exprimée en millisecondes). Si cette vérification estime que la machine doit se mettre en veille, le procédé passe à une étape d'attente 103.

Le but de l'étape de surveillance 102 est de mesurer une fonction d'utilité du routeur. Si l'utilité du routeur est faible, le routeur s'éteint puis se rallume soit à la demande, soit périodiquement pour mesurer de nouveau sa fonction d'utilité. L'objectif global est de consommer le moins d'énergie possible pour le fonctionnement du réseau.

L'étape d'attente 103 comprend un état d'attente pendant une troisième durée D3 paramétrable et comprise entre une borne minimale et une borne maximale. L'étape 103 comprend, en outre, à l'issue de cette attente, une nouvelle vérification (la même que celle de l'étape de surveillance 102 surveillance). Si la situation n'a pas changée (le routeur doit se mettre en veille) alors le procédé passe à une étape d'extinction 104. Sinon, le procédé repasse à l'étape de surveillance 102.

Avantageusement, la troisième durée D3 est déterminée de façon pseudo-aléatoire. L'utilisation d'une valeur pseudo-aléatoire permet de désynchroniser les routeurs. Il devient ainsi hautement improbable que deux routeurs identiques exécutent simultanément la dernière vérification de l'étape d'attente 103. En effet, une des difficultés dans l'utilisation d'un algorithme distribué est que, par définition, il n'existe pas d'entité centrale permettant la coordination des routeurs. Or, il est important que deux routeurs ne puissent pas exécuter simultanément la dernière vérification car ceci peut avoir pour conséquence que ces deux routeurs se considèrent mutuellement comme non éteints et passent tous les deux à l'étape d'extinction 104 entrainant par exemple la déconnexion d'un équipement du réseau.

Si, durant l'étape d'attente 103, le routeur reçoit un message d'extinction d'un autre routeur, le procédé repasse à l'étape de surveillance 102.

L'étape d'extinction 104 envoie un message d'extinction à tous les autres routeurs du réseau, puis arrête le démon et met la machine en veille pour une quatrième durée D4. L'étape d'extinction 104 correspond à un état ou le service de routage est désactivé, le routeur est en veille et sa consommation électrique est très faible. À la sortie de la veille, la machine passe par l'étape d'initialisation 101.

Les valeurs suivantes sont données à titre d'exemple :
- Deuxième durée D2 : 10000 ms,
- Borne minimale de la troisième durée D3 : 5000 ms,
- Borne maximale de la troisième durée D3: 15000 ms,
- Première durée D1 : 2 s,
- quatrième durée D4.: 40 s.

Si le routeur possède des mécanismes de rallumage à la demande (connu sous le nom anglo-saxon de Wake on LAN), dans ce cas, la quatrième durée D4 est infinie. Le rallumage est commandé par une source extérieure. Sinon, le routeur reste endormi. Le rallumage à la demande signifie qu'on rallume le routeur par un événement indépendant lorsqu'on en a besoin en lui envoyant une interruption par exemple.

Dans un mode de réalisation préféré, présenté à la figure 1b, le procédé comprend en outre une étape d'attente supplémentaire 105 avant le passage à l'étape d'extinction 104. Cette étape 105 a pour but de compenser le temps de propagation des messages dans le réseau. Cette étape comprend un état d'attente pendant un délai durant une cinquième durée D5 avant de se mettre en veille. La cinquième durée D5 peut être par exemple de 10 ms. Si pendant ce délai, le routeur reçoit un message d'extinction d'un autre routeur, le procédé repasse à l'étape de surveillance 102.

Avantageusement, la liste de conditions prédéfinies à remplir pour permettre l'extinction du routeur comprend au moins l'une des conditions suivantes :
- Le routeur n'est pas en cours de transfert de trafic, dans le cas contraire le routeur étant utile et routant les paquets d'information vers des nœuds du réseau.
- Le routeur n'exécute pas d'autres applications, dans le cas contraire l'extinction du routeur provoquerait l'arrêt inopiné de ladite application,
- L'extinction du routeur n'entraîne pas la déconnexion d'au moins un des équipements du réseau.

Les deux premières conditions sont relativement faciles à vérifier. Il suffit localement de tester quelques paramètres et vérifier quelques tables pour bien être sûr que le routeur n'est pas en train de router du trafic ou qu'il y ait des applications autres que le routage s'exécutant sur le routeur.

La troisième condition est plus complexe à vérifier. On cherche à déterminer si le routeur est un point d'articulation du réseau, autrement dit, si lorsque le routeur s'éteint, il empêche le routage de l'information vers au moins un équipement du réseau. Cependant et dans beaucoup de réseaux, il existe plusieurs routes pour rejoindre des points sources vers des points destination. Il convient alors de rechercher dans le graphe du réseau si le fait de s'éteindre ne va pas déranger la connectivité de n'importe quel nœud du réseau.

La vérification de la condition selon laquelle l'extinction du routeur n'entraîne pas la déconnexion d'au moins un des équipements du réseau, se base sur l'utilisation d'un protocole d'état de liens. OSPF (Open Shortest Path First) pour les réseaux filaires ou OLSR (Optimized Link State Routing) pour les réseaux ad hoc et sans fil sont des exemples robustes de protocoles à état de liens. Dans une méthode de routage basée sur l'état de liens, chaque routeur découvre localement son environnement en communiquant avec ses voisins. Cette communication lui permet de découvrir ses voisins et l'état des liens qui le connecte à ses voisins. Après cette découverte, le routeur diffuse à tout le réseau des messages de topologie pour annoncer son voisinage avec l'état des liens. Ainsi tous les routeurs connaissent les voisins de tous les autres routeurs, ce qui suffit à définir la topologie du réseau. Ainsi, tous les routeurs du réseau peuvent à partir de cette information produire la topologie du réseau et peuvent calculer une route vers toutes les destinations. L'information de routage est alors stockée dans une table qu'on utilise pour transférer le trafic de l'information.

La vérification de cette condition peut s'effectuer par exemple de la façon suivante. À l'aide d'un protocole à état de liens, un routeur dans un réseau récupère le graphe du réseau. Ce graphe contient la topologie du réseau où les nœuds représentent des équipements ou des routeurs et les liens des connections entre ces équipements ou routeurs. Le routeur retire son existence du graphe puis sélectionne aléatoirement un de ses voisins puis applique un algorithme de parcours en profondeur du graphe (aussi appelé DFS pour Depth First Search) bien connu de l'état de la technique. Si ce voisin peut alors atteindre tous les autres nœuds du réseau, le routeur n'est pas utile et peut s'éteindre, dans le cas contraire il reste allumé.

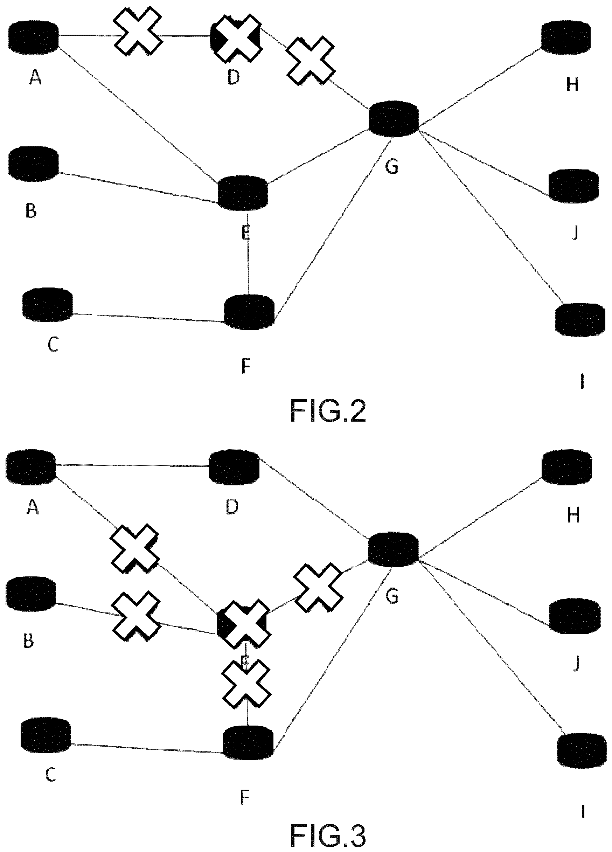

La figure 2 montre un exemple de réseau comportant une pluralité d'équipements (A, B, C, D, E, F, G, H, J et I) dont quatre routeurs (D, E, F, et G) reliant des nœuds terminaux (A, B, C H, J et I). Sur cette figure, on suppose que le procédé vérifie si la troisième condition est remplie pour le routeur D. La vérification comporte un parcours en profondeur du graphe représentant le réseau auquel on a retiré le nœud D (le retrait est symbolisé par des croix sur le nœud et les liens associés), depuis un nœud voisin du nœud D (A ou G). Dans cet exemple, le parcours en profondeur depuis A ou G atteint tous les nœuds. Ceci signifie que le routeur D remplit la troisième condition.

La figure 3 montre le même exemple de réseau qu'à la figure 2. Sur cette figure, on suppose que le procédé vérifie si la troisième condition est remplie pour le routeur E. La vérification comporte un parcours en profondeur du graphe représentant le réseau auquel on a retiré le nœud E (le retrait est symbolisé par des croix sur le nœud et les liens associés), depuis un nœud voisin du nœud E (A, B, F ou G). Dans cet exemple, le parcours en profondeur depuis A, B, F ou G n'atteint jamais tous les nœuds. Par exemple depuis le nœud A, il n'est pas possible d'atteindre le nœud B. Ceci signifie que le routeur E ne remplit la troisième condition et qu'il ne peut pas être éteint.

Dans un mode de réalisation préféré, la valeur de l'étape d'attente dépend de l'importance d'un routeur par rapport à un autre vis-à-vis de la qualité de service offerte par le réseau. Ce paramétrage se fait par exemple par le calcul d'une valeur maximale pour la durée d'attente. La détermination de la durée de l'étape d'attente se fait alors sur une valeur maximale plus importante pour le routeur qui offre la qualité de service la moins importante. Il est ainsi plus probable que le routeur offrant la meilleure qualité de service ait une durée d'attente plus longue que l'autre routeur, ce qui entrainera l'extinction de l'autre routeur.

La qualité de service peut prendre en compte un des paramètres suivant : le débit, le délai, le niveau de sécurité du routeur, ou une combinaison de ces paramètres. Ce paramétrage se base par exemple sur le protocole à état de liens où des valeurs des métriques sont communiquées dans les messages topologiques.

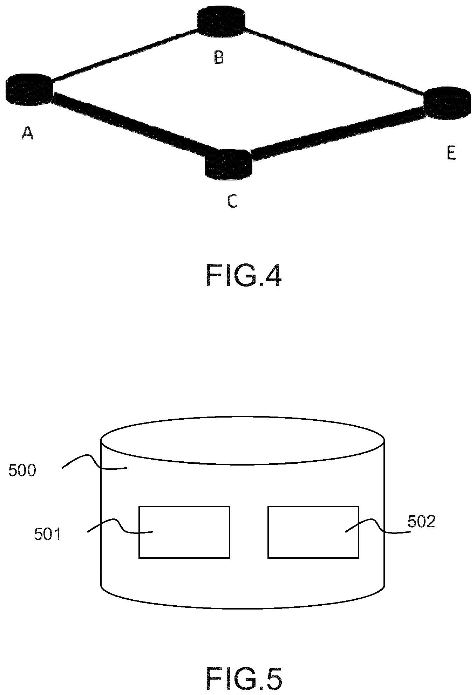

La figure 4 montre un autre exemple de réseau comportant une pluralité d'équipements (A, B, C, et E,) dont deux routeurs (B et C) reliant deux nœuds terminaux (A et E). On suppose que la largeur des liens reliant les équipements est proportionnelle à leur bande passante.

Le routeur C offre une meilleure bande passante que le routeur B. Donc la borne maximale de la troisième durée D3 pour le routeur C sera supérieure à la borne maximale de la troisième durée D3 pour le routeur B. Le routeur B aura ainsi une forte probabilité de s'éteindre avant le routeur C.

Par exemple, si la bande passante offerte par C est trois fois supérieure à celle offerte par B, il serait conseillé de générer la troisième durée D3 de B aléatoirement entre 0 et trois fois moins que la borne maximale de la troisième durée D3 pour le routeur C. Si la troisième durée D3 de C est choisie aléatoirement entre 0 et 9, la troisième durée D3 de B devrait être choisie entre 0 et 3. Dans cette configuration, B a une probabilité plus forte de s'éteindre avant C, l'extinction arrivant après une durée d'attente égale à la troisième durée D3.

L'invention concerne aussi un routeur comprenant des moyens de mise en œuvre du procédé selon l'invention. Ces moyens de mise en œuvre peuvent être logiciels, réalisés par exemple sous la forme d'un démon exécutable par le routeur. Ces moyens de mise en oeuvre peuvent être également matériels par exemple sous la forme d'une puce électronique programmable de type ASIC ou FPGA programmé pour exécuter le procédé selon l'invention. La figure 5 montre un exemple de routeur 500 selon l'invention. Le routeur comporte des moyens de mise en œuvre du service de routage 501 par exemple sous la forme d'un premier démon et des moyens de mise du procédé selon l'invention 502 sous la forme d'un second démon. Le routeur comprend une mémoire et un processeur (non représentés) apte à exécuter les démons 501 et 502.

L'invention concerne aussi un réseau de télécommunication comportant une pluralité de routeur selon l'invention. Les routeurs sont connectés entre eux par le biais de liaisons filaires ou sans fil.

## Revendications

1. Procédé pour l'extinction de routeurs fonctionnant selon un protocole à état de liens, dans un réseau de communications, ledit réseau reliant une pluralité d'équipements, **caractérisé en ce que** ledit procédé est exécuté simultanément sur une pluralité de routeurs du réseau et comprend pour chaque routeur:
- une étape d'initialisation (101) pendant une première durée après le démarrage du routeur,
- une étape de surveillance (102) du routeur dans le réseau, ladite étape de surveillance consistant à déterminer si une liste de conditions prédéfinies relatives à la fonction d'utilité du routeur sont vérifiées,
- une étape d'attente dans laquelle le routeur est mis en état d'attente pendant une troisième durée si ledit routeur ne reçoit aucun message d'extinction d'un autre routeur, le procédé revenant à ladite étape de surveillance du routeur à l'issue de l'étape d'attente (103),
- une étape d'extinction du routeur (104) comprenant l'extinction du routeur si lesdites conditions de la liste sont vérifiées pendant l'étape de surveillance exécutée à l'issue de l'étape d'attente et si aucun message en provenance d'un autre routeur du réseau signalant l'extinction dudit autre routeur n'a été reçu par le routeur,
- l'envoi d'un message signalant l'extinction dudit routeur aux autres routeurs du réseau,
et **en ce que** ladite liste de conditions comprend une condition consistant à vérifier si l'extinction du routeur n'entraîne pas la déconnexion d'au moins un des équipements,
la vérification de la condition selon laquelle l'extinction du routeur n'entraîne pas la déconnexion d'au moins un des équipements comprenant:
- une étape de détermination d'un graphe représentant la topologie du réseau à l'aide d'information issue du protocole à état de liens, le graphe comportant des nœuds représentant les équipements et des liens représentant les connections entre les équipements,
- une étape de sélection d'un nœud voisin au nœud représentant le routeur,
- une étape de parcours en profondeur du graphe auquel a été préalablement retiré le nœud représentant le routeur, à partir du nœud voisin sélectionné,
ladite condition consistant à déterminer si l'extinction du routeur n'entraîne pas la déconnexion d'au moins un des équipements étant vérifiée s'il est déterminé que tous les nœuds sont accessibles depuis le nœud voisin.

2. Procédé selon la revendication 1, comprenant, en outre, une étape d'attente complémentaire (105) dont la durée est paramétrable, destinée à prendre en compte le temps de propagation des messages dans le réseau.

3. Procédé selon l'une des revendications 1 ou 2, dans lequel, la troisième durée de l'étape d'attente est déterminée selon une méthode pseudo-aléatoire, de façon à éviter l'extinction simultanée de plusieurs routeurs.

4. Procédé selon la revendication 3, dans lequel la troisième durée est déterminée pour chaque routeur en fonction de l'importance du routeur par rapport aux autres routeurs vis-à-vis de la qualité de service offerte par le réseau.

5. Procédé selon l'une la revendication 4, dans lequel, la qualité de service du routeur est évaluée à partir d'au moins une caractéristique choisie parmi : le débit, le délai, le niveau de sécurité du routeur.

6. Procédé selon l'une des revendications précédentes, **caractérisé en ce que** ladite liste de conditions comprend en outre :
- une condition vérifiée si le routeur n'est pas en cours de transfert de trafic.

7. Procédé selon l'une des revendications précédentes, **caractérisé en ce que** ladite liste de conditions comprend en outre :
- une condition vérifiée si le routeur n'exécute pas d'autres applications.

8. Routeur (500) **caractérisé en ce qu'**il comprend des moyens de mise en œuvre (502) du procédé selon l'une des revendications précédentes.

9. Réseau de télécommunications **caractérisé en ce qu'**il comporte une pluralité de routeurs (500) selon la revendication 8.

## Patentansprüche

1. Verfahren zum Ausschalten von Routern, welche nach einem Linkzustands-Protokoll arbeiten, in einem Kommunikationsnetzwerk, wobei das Netzwerk eine Vielzahl von Ausrüstungen verbindet, **dadurch gekennzeichnet, dass** das Verfahren gleichzeitig an einer Vielzahl von Routern des Netzwerks ausgeführt wird und für jeden Router Folgendes beinhaltet:
- einen Initialisierungsschritt (101) während einer ersten Dauer nach dem Starten des Routers,
- einen Überwachungsschritt (102) des Routers in dem Netzwerk, wobei der Überwachungsschritt darin besteht zu bestimmen, ob eine Liste vorbestimmter Bedingungen in Bezug auf die Nutzfunktion des Routers bewahrheitet sind,
- einen Warteschritt, bei welchem der Router über eine dritte Dauer in einen Wartezustand versetzt wird, wenn der Router keine Ausschaltemeldung von einem anderen Router empfängt, wobei das Verfahren zum Überwachungsschritt des Routers nach Ablauf des Warteschrittes (103) zurückkehrt,
- einen Ausschalteschritt des Routers (104), beinhaltend das Ausschalten des Routers, wenn die Bedingungen der Liste bewahrheitet sind, während des Überwachungsschrittes, welcher nach Ablauf des Warteschrittes ausgeführt wird, und wenn keine Meldung von einem anderen Router des Netzwerks, welche die Ausschaltung des anderen Routers meldet, vom Router empfangen wurde,
- die Versendung einer Meldung, welche den anderen Routern des Netzwerks die Ausschaltung des Routers meldet,
und dadurch, dass die Bedingungsliste eine Bedingung beinhaltet, welche darin besteht, zu überprüfen, ob die Ausschaltung des Routers nicht die Abmeldung mindestens einer der Ausrüstungen bewirkt,
wobei die Überprüfung der Bedingung, gemäß der die Abschaltung des Routers nicht die Abmeldung mindestens einer der Ausrüstungen bewirkt, Folgendes beinhaltet:
- einen Bestimmungsschritt einer Grafik, welche die Topologie des Netzwerks anhand einer Information darstellt, welche aus dem Linkzustands-Protokoll stammt, wobei die Grafik Knoten, welche die Ausrüstungen darstellen, und Links, welche die Verbindungen zwischen den Ausrüstungen darstellen, beinhaltet,
- einen Auswahlschritt eines Knotens, welcher dem den Router darstellenden Knoten benachbart ist,
- einen Schritt der Tiefensuche der Grafik, aus welcher zuvor der den Router darstellende Knoten entfernt wurde, ab dem ausgewählten benachbarten Knoten,
wobei die Bedingung, welche darin besteht, zu bestimmen, ob die Ausschaltung des Routers nicht die Abmeldung mindestens einer der Ausrüstungen bewirkt, bewahrheitet ist, wenn bestimmt wird, dass alle Knoten von dem benachbarten Knoten aus zugänglich sind.

2. Verfahren nach Anspruch 1, zudem beinhaltend einen ergänzenden Warteschritt (105) mit parametrisierbarer Dauer, dazu bestimmt, die Fortpflanzungszeit der Meldungen in dem Netzwerk zu berücksichtigen.

3. Verfahren nach einem der Ansprüche 1 oder 2, bei welchem die dritte Dauer des Warteschrittes gemäß einem pseudowillkürlichen Verfahren bestimmt wird, um die gleichzeitige Ausschaltung mehrerer Router zu vermeiden.

4. Verfahren nach Anspruch 3, bei welchem die dritte Dauer für jeden Router anhand der Bedeutung des Routers in Bezug auf die anderen Router angesichts der vom Netzwerk gebotenen Dienstqualität bestimmt wird.

5. Verfahren nach Anspruch 4, bei welchem die Dienstqualität des Routers anhand mindestens eines Merkmals bewertet wird, ausgewählt aus: Übertragungsrate, Verzögerung, Sicherheitslevel des Routers.

6. Verfahren nach einem der vorhergehenden Ansprüche, **dadurch gekennzeichnet, dass** die Bedingungsliste zudem Folgendes beinhaltet:
- eine bewahrheitete Bedingung, wenn der Router augenblicklich keinen Verkehr überträgt.

7. Verfahren nach einem der vorhergehenden Ansprüche, **dadurch gekennzeichnet, dass** die Bedingungsliste zudem Folgendes beinhaltet:
- eine bewahrheitete Bedingung, wenn der Router keine anderen Anwendungen ausführt.

8. Router (500), **dadurch gekennzeichnet, dass** er Mittel zur Umsetzung (502) des Verfahrens nach einem der vorhergehenden Ansprüche beinhaltet.

9. Telekommunikationsnetzwerk, **dadurch gekennzeichnet, dass** es eine Vielzahl an Routern (500) nach Anspruch 8 beinhaltet.

## Claims

1. A method for turning off routers, operating according to a link-state protocol, in a communications network, said network linking a plurality of devices, **characterized in that** said method is executed simultaneously over a plurality of routers of the network and includes for each router:
- a step of initializing (101) during a first duration, after turning on the router,
- a step of monitoring (102) the router in the network, said step of monitoring consisting in determining if a list of predefined conditions related to the utility function of the router are verified,
- a step of waiting in which the router is set in a waiting state for a third duration if no turning-off message is received by said router from another router of the network, the method returning to the monitoring step after the waiting step (103),
- a step of turning off the router (104) comprising turning-off the router if said conditions of the list are verified during the monitoring step executed after the waiting step and if no message is received by said router from another router of the network signaling the turning off of said another router,
- sending a message signaling the turning off of said router to the other routers of the network,
and wherein said list of conditions comprise a condition consisting in verifying if the turning-off of the router does not lead the disconnection of at least one of the devices,
the verification of the condition according to which the turning off the router does not lead to the disconnection of at least one of the devices of the network including:
- a step of determining a graph representing the topology of the network using information resulting from the link-state protocol, the graph including nodes representing the devices and links representing the connections between the devices,
- a step of selecting a neighbor node to the node representing the router,
- a step of depth searching, from the selected neighbor node, the graph of the network from which the node representing the router was previously withdrawn,
said condition consisting in determining if the turning off the router does not lead to the disconnection of at least one of the devices being verified if it is determined that all the nodes are accessible from the neighbor node.

2. The method as claimed in claim 1, further comprising an additional waiting step (105), the duration of which can be parameterized, to take into account the propagation time of the messages in the network.

3. The method as claimed in claim 1 or 2, in which the third duration of the waiting step is determined according to a pseudo-random method, so as to avoid several routers being turned off simultaneously.

4. The method as claimed in one of the preceding claims, in which the third duration is determined for each router as a function of the importance of the router with respect to the other routers in terms of the quality of service provided by the network.

5. The method as claimed in claim 4, in which the quality of service of the router is evaluated from at least one characteristic chosen among: the speed, the delay, the security level of the router.

6. The method as claimed in one of the preceding claims, **characterized in that** the list of conditions further comprise:
- a condition verified if the router is not transferring traffic.

7. The method as claimed in one of the preceding claims, **characterized in that** the list of conditions further comprise:
- a condition verified if the router does not execute other applications.

8. A router (500) **characterized in that** it comprises means (502) for implementing the method as claimed in one of the preceding claims.

9. A telecommunications network **characterized in that** it includes a plurality of routers (500) as claimed in claim 8.
